# EUROPEAN PATENT SPECIFICATION

(11) **EP 2 666 759 B1**
(45) Date of publication and mention of the grant of the patent: **17.07.2019**
(21) Application number: 12382198.5
(22) Date of filing: 24.05.2012
(51) Int. Cl.: C05B 11/10, C05B 17/00, C05F 7/00, C02F 1/52, C02F 1/64, C05D 9/02

(54) **Method of synthesis of ferrous phosphate from waste materials**
Verfahren zur Herstellung von Eisen (II) Phosphat aus Abfallmaterialien
Procédé d'obtention de phosphate ferreux à partir de déchets

(43) Date of publication of application: 27.11.2013
(73) Proprietor: Fertiberia, S.A., 28046 Madrid (ES)
(72) Inventor: Cazador Ruiz, M. Cinta, 28046 Madrid (ES); Galindo Paniagua, Francisca, 28046 Madrid (ES); Brañas Lasala, Javier, 28046 Madrid (ES)
(74) Representative: Elzaburu S.L.P.

(56) References cited:
- WO-A2-2009/030796
- CA-A1- 2 252 656
- ES-A1- 2 035 766
- FR-A1- 2 734 562
- US-A- 5 997 747
- US-A1- 2011 154 873
- US-A1- 2012 103 037

## Description

### Field of the invention

This invention refers to a method for obtaining a compound of iron and phosphorous of a composition similar to vivianite using waste materials or by-products containing phosphoric acid and/or phosphates and industrial by-products containing Fe(II).

### DESCRIPTION

### Object of the invention

The object of this invention refers to a method of obtaining a compound of iron and phosphorous of a composition similar to vivianite (Fe₃(PO₄)₂·8H₂O) from waste materials or by-products as a source of phosphorous, such as waste water with phosphorous and/or phosphoric acid from fertilizer manufacture, and industrial by-products containing Fe(II), mainly ferrous sulphates, obtaining a compound which is useful as a solid fertilizer, being a nutritional source of phosphorous and iron, and which is also effective in correcting and preventing iron chlorosis in plants.

### State of the art

Iron chlorosis is a chlorophyll deficiency in leaves caused by an iron (Fe) nutrition disorder. When plants suffer from an Fe deficiency, the most visible effect is seen in the youngest leaves, with characteristic yellowing between the veins. In cases in which the chlorosis is not corrected, the youngest leaves can become completely yellow and they shrink in size. In severe cases the affected shoots can even come to lose their leaves (Pastor et al., 2000). Above all, it affects crops in calcareous soils (De Santiago and Delgado, 2007), but in general, any factor affecting the mobilisation of the iron available to the plant will be related to iron chlorosis (Pastor et al., 2000).

Iron chlorosis affects crops of great socioeconomic significance, such as sunflowers, chickpea, vines, peach, kiwifruit, etc., but above all it affects the olive (Del Campillo and Torrent, 2005).

Iron chlorosis has a great economic impact not solely due to the loss of fruit production, but rather to the loss of vigour and shortening of the useful life of the tree. Prevention and correction of iron chlorosis have been tackled using different agricultural practices, including application of various iron compounds to the soil (such as chelates, inorganic salts or organic complexes, industrial by-products enriched with iron, etc.), foliar treatments and application of injection to tree trunks (Iglesias et al., 1998). These treatments are either Fe compounds which are relatively economical but with limited effectiveness (ferrous sulphate) or highly effective Fe compounds (chelates) which are also very expensive (Rosado et al., 2000). Additionally, they wash away easily, hence it is necessary to apply them once or twice per year (Iglesias et al., 1998) and they do not degrade easily and are toxic to some microorganisms (Rombolà et al., 2003).

Vivianite, Fe₃(PO₄)₂·8H₂O, is a blue-green mineral containing 33.42% Fe, 12.36% P and 28.7% H₂O. It appears naturally in sediments at the bottom of some lakes under certain conditions of redox potential, sediment-water and sediment-sediment interfaces, pH, availability of elements such as Fe, S, P, Ca, Mn, Mg, organic material content and sedimentation rate (Sapota et al., 2006). Reducing environments or anaerobic conditions also favour the precipitation of vivianite (Al-Borno and Tomson, 1994). Although it has low solubility at the pH of calcareous soils, vivianite releases Fe which evolves to amorphous compounds (ferrihydrite or lepidocrite with low crystallinity) which form the main source of Fe for cultivated plants in limy soils (Rosado et al., 2000). It has been seen in the prior art that the vivianite, (Fe₃(PO₄)2·8H₂O), applied to calcareous soils at 1 g·kg⁻¹ of soil, is capable of preventing iron chlorosis in lupins and chickpeas cultivated in pots under controlled conditions (Eynard et al.,1992), in pear trees cultivated in the field by making use of traditional agricultural practices (Iglesias et al., 1998) and in olive groves over at least 3 years (Rosado et al., 2002).

A compound with a similar composition to vivianite in Fe and P can also be obtained from ferrous sulphate mixed with monoammonium phosphate, diammonium phosphate or phosphoric acid:
▪ By dissolving diammonium phosphate with FeSO₄·7H₂O to obtain vivianite in suspension for olive (Rosado et al., 2002) and pear (Iglesias et al., 1998) trees
▪ By mixing FeSO₄·7H₂O with phosphoric acid for olive trees (Rosado et al., 2002)
▪ By dissolving monoammonium phosphate with FeSO₄·7H₂O (Rombolà et al., 2003) for kiwifruit.

A method for correcting iron chlorosis in plants based on phosphoric acid enriched with Fe is also described in Spanish patent ES 2 320 841, in the name of the Universidad de Sevilla. This consists of applying a phosphoric acid solution enriched with Fe, from commercial ferrous sulphate, by means of fertigation (irrigation water plus fertilizers). However, the iron and phosphorous compound similar to vivianite is not obtained in this method, as the solution is maintained at an acid pH, preferably below 2, so that the Fe and other elements do not precipitate and cause damage to the irrigation installations.

These procedures have generally been carried out laboratory testing level, using pure reagents to confirm the product's effectiveness as an iron chlorosis corrector in the field.

Also, ES 2 035 766 discloses a method for correcting the iron chlorosis in plants by mixing soil with partially oxidised ferrous phosphate at a certain ratio.

WO 2009/030796 A2 discloses the use of compost from agroindustrial waste for the control of Fe(II) defficiency in plants by applying to the soil a mixture of compost and an Fe(II) salt.

FR 2 734 562 discloses a phosphated fertiliser containing sulphur and oligoelements for use in agriculture and industry, useful to prevent iron chlorosis.

However, the authors have now found that if, instead of using pure reagents, waste materials or by-products with phosphorous are used, such as waste water from fertilizer manufacture, with added phosphoric acid if necessary, as a source of phosphorous, and by-products or wastes with iron in reduced form (Fe²⁺), especially industrial iron sulphates with differing iron contents, such as the iron sulphates generated in the production of titanium dioxide, as sources of iron, an iron and phosphorous compound with a similar composition to vivianite (hereinafter also called "ferrous phosphate compound") is obtained with unexpected technical advantages:
- On the one hand, by using the method of the invention, in spite of starting with raw materials with a lower Fe/P quotient, more ferrous phosphate compound is obtained than by using the methods of the prior art, hence the method of the invention, overall, produces more grams of ferrous sulphate compound per gram of both Fe and P.
- On the other hand, the ferrous sulphate compound produced according to the method of the invention has a notable resistance to drying, having been dried at 100°C for 18 hours without significant changes, while pure vivianite oxides rapidly in 45 minutes at 100°C.

On the other hand, in the patent literature, for example documents CA 2,252,656 and US 5,997,747, methods for treatment of waste water can be found to reduce their phosphorous content. However, the methods achieve this objective by adding Fe(III) compounds to the waste waters and maintaining anaerobic conditions and/or using reducing agents, methods which in some cases also require the use of anaerobic reactors with long residence times.

Therefore, one object of the invention is to provide a method for producing a ferrous phosphate compound with a composition similar to vivianite, which is useful as a fertilizer and for correcting iron chlorosis in plants, from waste water (waste exploitation), which overcomes the disadvantages of the prior art.

### Detailed description of the invention

Consequently, a first aspect of the invention is aimed at a method for obtaining a product comprising ferrous phosphate and ammonium, potassium or sodium phosphates, which is useful as a fertilizer and in the correction of iron chlorosis in plants, from waste materials or by-products containing phosphoric acid and/or phosphates and industrial products containing Fe(II), comprising the steps of:
a. providing waste materials or by-products containing phosphoric acid and/or phosphates and, where necessary, adjusting their P content with phosphoric acid to 0.01 - 23% P (w/w);
b. mixing the waste material from step a) with industrial by-products containing Fe(II) with an Fe concentration in the range 0.5 to 27.5% Fe (w/w);
c. adjusting the pH of the resulting solution or suspension to a value between 6.5 and 7.5 with a mixture comprising at least one of NH₄OH, NaOK and KOH, thereby precipitating the product comprising ferrous phosphate and ammonium, potassium or sodium phosphates; and
d. separating and drying the precipitate obtained.

As a source of phosphorous, acidic waste water is used for preference from the manufacture of phosphoric acid and phosphate fertilizers, enriched in P if necessary to a concentration between 0.01 and 23% P (w/w) or more preferably between 0.50 and 12% P (w/w) and even more preferably between 0.65 and 6.55% P (w/w).

As a source of iron, raw materials, by-products or wastes are used with iron in a reduced form (Fe²⁺), especially industrial iron sulphates with differing iron contents, as a waste current in some cases, such as iron sulphates generated in the production of titanium dioxide. These sources have an Fe content between 0.5 and 27.5% (w/w), preferably between 2 and 20 % (w/w) Fe and most preferably between 12 and 20 % (w/w) Fe. Consequently, according to the method of the invention, these raw materials are preferably mixed at a ratio of 0.10 ml - 368.45 ml of phosphated waste water per gram of Fe, or more preferably at a ratio of 1.10 ml - 72.41 ml of phosphated waste water per gram of Fe and even more preferably at a ratio of 5.34 ml - 58.50 ml of phosphated waste water per gram of Fe. The suspension formed is then neutralised using a basic hydroxide, preferably ammoniacal, either in ammoniacal solution or ammonia gas, or with other basic hydroxides such as NaOH or KOH, such that the final pH of the solution is preferably between 6.5 and 7.5 and more preferably around 7.0, with which the ferrous phosphate compound precipitates. Finally, this precipitate is separated and dried using the habitual means known to the person skilled in the art.

In general, throughout this specification, by the terms solution or waste product, byproduct or waste, it will be understood to mean any material resulting from a production process.

The present method constitutes a simple, effective and low-cost method of industrial manufacture of this product, resulting in a compound with improved technical characteristics and, at the same time, with a lower manufacturing cost than that of the prior art. Additionally, the ferrous phosphate compound obtained according to the invention has, in addition to Fe, a high phosphorous concentration, and it can also contain other major nutrients (e.g. N, K, Na), secondary nutrients (S, Mg, etc.) and micronutrients (Mo, Mn, Zn, etc.) necessary for the plant, constituting a slow release source of nutrients, given ferrous phosphate's low solubility in water.

The data on the method of the invention, as well as the iron and phosphorous compounds obtained using it, were compared with the prior art, noting that the method of the invention exhibits a lower Fe/P ratio and higher PFe(iron and phosphorous compound)/Fe and PFe/P ratios in accordance with the table below:

| **Bibliographic references** | **g Fe/g P** | **g PFe/g P** | **g PFe/ g Fe** |
|---|---|---|---|
| R**osado 2002; Roldán 2002; Del Campillo, 2000** | 3.00 - 3.91 | 6.11 - 9.94 | 1.56 - 3.32 |
| **Invention** | 2.63 - 2.86 | 10.01 - 17.38 | 3.45 - 6.56 |

In other words, it is shown that, even with a lower Fe/P ratio, the method of the invention produces more ferrous phosphate compound per unit of both P and Fe than those of the prior art. Without intending to be bound by the theory, it is believed that, in the method of the invention, based on waste water, which naturally has a variable composition and lower purity, and waste ferrous sulphates which also have variable composition and lower purity, on precipitating the ferrous phosphate compound produces a mixture of vivianite plus various types of phosphates such as ammonium/potassiun/sodium. This may explain the small percentage content of soluble P contained by the ferrous phosphate compound obtained according to the invention, while those in prior publications do not appear to have this soluble P. In other words, in publications on the prior art, a compound is obtained which is similar to more or less highly-pure vivianite. Meanwhile two phases are obtained using the procedure of the invention. The majority are made up of a ferrous phosphate compound similar to vivianite, and the minority are made up, it is believed, of soluble ammonium, potassium and sodium phosphates, as well as microelements, producing a larger amount of overall product, i.e., more grams of ferrous phosphate compound per gram of either Fe or P.

On the other hand, the authors have also confirmed that the ferrous phosphate compounds synthesised according to the method of the invention are capable of resisting drying at 100°C for 18 hours without significant alterations, while it is known that in pure vivianite, the Fe oxidises rapidly after 45 minutes at 100°C. The reason for this behaviour is believed to be due to the influence of other cations susceptible to being oxidised which are present in percentages or ppm (from the raw materials), the drying method and the surface exposed during this. Therefore, when the ferrous phosphate compound from the invention is dried, only a small portion of the Fe oxidises (approximately 25 - 35% of the total Fe is oxidised) and the rest remains stable. On the contrary, in the case of publications on the prior art, after the 45 minutes indicated by the bibliography, the majority of the Fe²⁺ has yielded its electrons and oxidised to Fe³⁺, leading to ferric phosphate.

### Brief description of the figures

Figure 1. Shows a comparison of the diffractogram for vivianite (lower diffractogram) with that for a ferrous phosphate synthesised from phosphated waste water and ferrous sulphate laboratory reagent (upper diffractogram).
Figure 2. Shows a comparison of the diffractogram for vivianite (lower diffractogram) with that for a ferrous phosphate synthesised from phosphated waste water and waste ferrous sulphate with 18% Fe (upper diffractogram).
Figure 3. Shows a comparison of the diffractogram for vivianite (lower diffractogram) with that for a ferrous phosphate synthesised from phosphated waste water and ferrous sulphate with 15% Fe (upper diffractogram).
Figure 4. Shows a comparison of the diffractogram for vivianite (lower diffractogram) with that for a ferrous phosphate synthesised from phosphated waste water and waste ferrous sulphate monohydrate (upper diffractogram).

The similarities can be clearly seen in all these figures between the diffractograms produced by the vivianite and the different ferrous sulphate compounds obtained from phosphated waste water and ferrous sulphate with differing Fe contents according to the invention.

### Examples of embodiments of the invention

Some examples of ferrous phosphate synthesis are shown below, according to the source of iron used in the process:

### 1. Example of ferrous phosphate synthesis with phosphated waste water and ferrous sulphate laboratory reagent

Three experiments were carried out with four repetitions in which the ferrous sulphate compound was obtained from waste water as a source of phosphorous with a phosphorous content of 1.09% P and iron sulphate heptahydrate, laboratory reagent (20.08% Fe). One litre of this waste water containing approximately 10.91 g of P was mixed with 149.84 g of ferrous sulphate heptahydrate containing 29.97 g of Fe in a 2 litre beaker and was stirred until it dissolved. Therefore, the Fe/P ratio was 2.747. The pH was then raised to 6.5 - 7.5 with NH₄OH, NaOH or KOH to precipitate the ferrous phosphate and the suspension was filtered.

Table 1 shows the mean compositions of the 3 experiments carried out:

**Table 1. Compositions of the ferrous phosphates obtained according to the procedure described on dry material**

| | **NH₄OH** | **NaOH** | **KOH** |
|---|---|---|---|
| **% P** | 10.21 | 9.82 | 9.88 |
| **Total % Fe** | 30.90 | 31.72 | 31.23 |
| **% Fe²⁺** | 21.44 | 19.62 | 19.29 |
| **% Fe³⁺** | 9.46 | 12.10 | 11.94 |
| **% N** | 2.30 | 0.058 | 0.062 |
| **% K** | 1.70 | 1.85 | 13.19 |
| **% Na** | 0.69 | 3.53 | 0.52 |

It is shown that the ferrous phosphate compound resulting has a similar composition to that of mineral vivianite (12.36% P and 33.5% Fe total). In the case of these synthesised ferrous phosphates, upon raising the pH with NH₄OH, NaOH or KOH, they were enriched with N, Na or K and other micronutrients at the same time, constituting a source of these elements for plant nutrition.

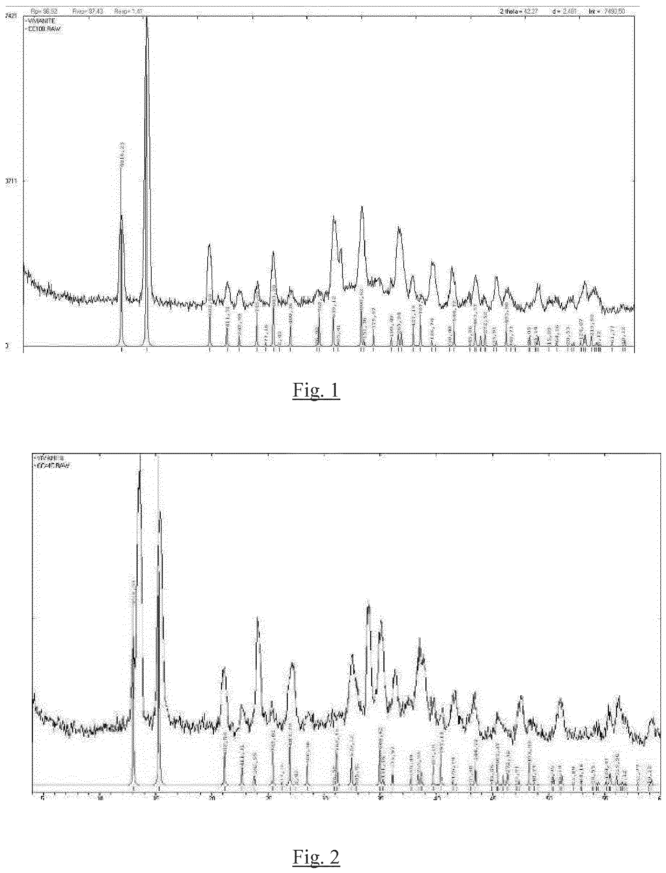

Furthermore, as with vivianite, the ferrous phosphates were blue in colour, indicating the presence of Fe²⁺ cations in their mineral structure, as confirmed in the diffractogram shown in Figure 1.

### 2. Example of ferrous phosphate synthesis with phosphated waste water and industrial ferrous sulphate

As in example 1, nine experiments were carried out with four repetitions in which ferrous phosphate was synthesised from waste water as a source of phosphorous and industrial waste iron sulphates.

### 2.1. Ferrous phosphate obtained with iron sulphate heptahydrate with 18% Fe

In a 500 ml beaker, 250 ml of phosphated waste water containing 2.07 g of P was mixed with 31.28 g of ferrous sulphate (5.63 g Fe) and stirred until it dissolved. Therefore, the Fe/P ratio was 2.719. The solution was then neutralised with NH₄OH, NaOH or KOH to a pH of 6.5 - 7.5 so that the ferrous sulphate compound precipitated and the suspension was filtered.

Table 2 shows the mean compositions of the experiments carried out:

**Table 2. Compositions of the ferrous phosphates obtained with waste FeSO₄·7H₂O (18% Fe) according to the procedure described on dry material**

| | **NH₄OH** | **NaOH** | **KOH** |
|---|---|---|---|
| **% P** | 9.72 | 9.72 | 10.08 |
| **Total % Fe** | 23.25 | 24.23 | 27.70 |
| **% Fe²⁺** | 14.35 | 18.02 | 16.56 |
| **% Fe³⁺** | 8.90 | 6.21 | 11.14 |
| **% N** | 3.30 | 0.17 | 0.10 |
| **% K** | 0.29 | 0.05 | 6.60 |
| **% Na** | 0.46 | 3.73 | 0.47 |

### 2.2. Ferrous phosphate obtained with iron sulphate heptahydrate with 15% Fe

In a 500 ml beaker, 250 ml of waste water with a phosphorous content of 2.31 g P was mixed with 41.88 g of ferrous sulphate heptahydrate with 15% Fe (6.28 g Fe) and was stirred until it dissolved. The Fe/P was, therefore, 2.719. It was then neutralised at a pH of 6.5 - 7.5 with NH₄OH, NaOH or KOH to precipitate the ferrous phosphate and the suspension was filtered.

Table 3 shows the mean compositions of the experiments carried out:

**Table 3. Compositions of the ferrous phosphates obtained with waste FeSO₄·7H₂O (15% Fe) according to the procedure described on dry material**

| | **NH₄OH** | **NaOH** | **KOH** |
|---|---|---|---|
| **% P** | 8.88 | 8.08 | 8.08 |
| **Total %** F**e** | 23.72 | 24.65 | 21.74 |
| **% Fe²⁺** | 13.77 | 12.50 | 12.08 |
| **% Fe³⁺** | 9.95 | 12.15 | 9.66 |
| **% N** | 2.09 | 0.10 | 0.12 |
| **% K** | 0.47 | 0.28 | 4.62 |
| **% Na** | 0.41 | 2.79 | 0.80 |

### 2.3. Ferrous phosphate obtained with iron sulphate monohydrate with 16% Fe

In a 1 litre beaker, 500 ml of waste water with a phosphorous content of 3.93 g P was mixed with 65.04 g of ferrous sulphate monohydrate with 16% Fe (10.41 g Fe) and was stirred until it dissolved. Therefore, the Fe/P ratio was 2.647. The pH was then raised to 6.5 - 7.5 with NH₄OH, NaOH or KOH so that the ferrous phosphate precipitated and the suspension was filtered.

Table 4 shows the mean compositions of the experiments carried out:

**Table 4. Compositions of the ferrous phosphates obtained with waste FeSO₄·H₂O (16% Fe) according to the procedure described on dry material**

| | **NH₄OH** | **NaOH** | **KOH** |
|---|---|---|---|
| **% P** | 8.58 | 7.18 | 10.01 |
| **Total % Fe** | 25.63 | 25.15 | 27.49 |
| **% Fe²⁺** | 18.00 | 12.59 | 19.31 |
| **% Fe³⁺** | 12.63 | 12.56 | 8.18 |
| **% N** | 2.12 | 0.09 | 0.05 |
| **% K** | 0.12 | 0.10 | 7.60 |
| **% Na** | 2.63 | 6.17 | 2.41 |

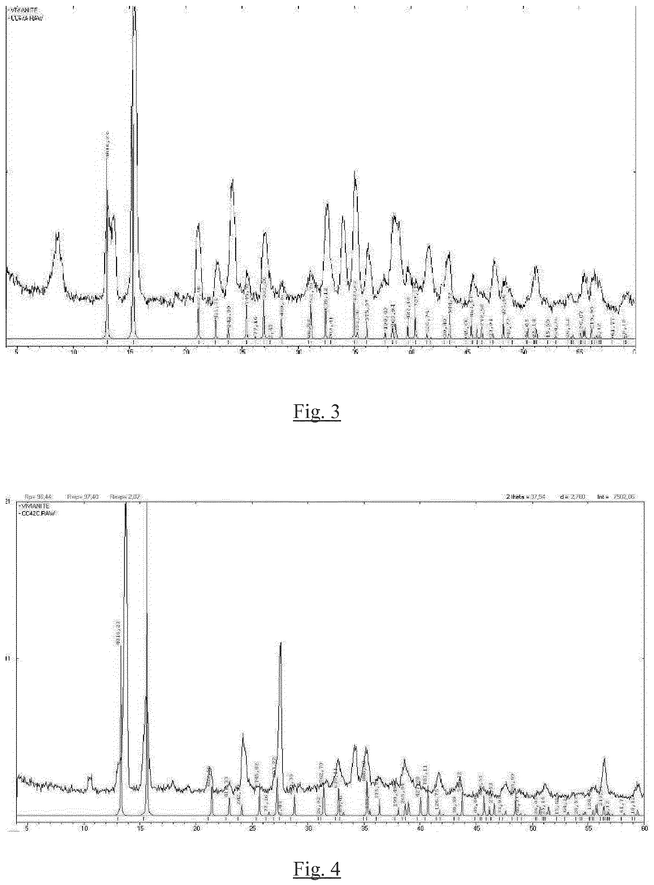

The product obtained in these cases had a lower Fe and P content than that presented in table 1. The difference lies in the source of Fe. The trials summarised in Table 1 were carried out with ferrous sulphate laboratory reagent, while the trials in Tables 2, 3 and 4 were carried out with ferrous sulphates which come from industries and are considered to be wastes from them, hence they contain a certain level of impurities which reduce the total nutrients and promote the appearance of other solid compounds, generating other small peaks in the diffractograms (Figures 2 - 4).

The total Fe content of the products synthesised at low cost varies between 21.74 and 27.70%.

### Bibliographic references:

Al-Borno, A., Tomson, M.B. (1994). The temperature dependence of the solubility product constant of vivianite. Geochimia et Cosmochinia Acta. Vol. 58. No 24. Pages 5373 - 5378.
De Santiago, A., Delgado, A. (2007). Effects of humic substances on iron nutrition of lupin. Biology and Fertility of Soils (2007) 43:829 - 836
Del Campillo, M.C., Barrón, V. and Torrent, J. (2000). Clorosis férrica del olivo y técnicas de corrección más adecuadas. Vida rural Mayo 2000. Pages 54-60
Del Campillo, M.C., Torrent., J. (2005). El contenido de Fe en suelo es el mejor indicador del riesgo de clorosis férrica, I Jornadas del Grupo de Fertilización de la SECH, Moncada (Valencia)
Eynard, A., del Campillo, C., Barrón, V., Torrent., J. (1992). Use of vivianite (Fe3(PO4)2·8H2O) to prevent iron chlorosis in calcareous soils. Fertilizer Research 31: 61-67
Iglesias, I., Dalmau, R., Marcé, X., del Campillo, C., Barrón, V., Torrent., J. (1998). Diversos fosfatos de hierro presentan eficacia prolongada en la prevención de la clorosis férrica en peral (cv. Blanquilla). Nutri-fitos, Pages. 76 - 87
Pastor, M., Castro, J., hidalgo, J., Camacho, L., F., del Campillo, C. (2000). Corrección de la clorosis férrica en olivar mediante la utilización de quelatos Fe-EDDHA en fertirrigación, Edafología, Volume 7-2. Pages 197-204
Rombolà, A.D., Toselli, M., Carpintero, J., Ammari, T., Quartieri, M., Torrent, J., Marangoni, B. (2003). Prevention of iron-deficiency induced chlorosis in kiwifruit (Actinidia deliciosa) through soil application of synthetic vivianite in a calcareous soil. Journal of Plant Nutrition. Vol. 26, Nos. 10 & 11, pp. 2031-2041
Roldan, R., Barrón, V., Torrent, J. (2002). Experimental alteration of vivianite to lepidocrocite in a calcareous medium. Clay minerals 37: 709-718
Rosado, R., del Campillo, M.C., Barrón, V. y Torrent, J. (2000). Inyección de vivianita al suelo para corregir la clorosis férrica en olivo. Edafología. Volume 7-2. Pages. 57-66
Rosado, R., del Campillo, M.C., Barrón, V. and Torrent, J. (2002). Long-term effectiveness of vivianite in reducing iron chlorosis in olive trees. Plant and soil 241: 139-144
Sapota, T., Aldahan, A., Al-Aasm, I.S. (2006). Sedimentary facies and climate control on formation of vivianite and siderite microconcretions in sediments of Lake Baikal, Siberia. Journal Paleolimnology 36: 245 - 257

## Claims

1. A method to obtain a product comprising ferrous phosphate and ammonium, potassium or sodium phosphates, which is useful as a fertilizer and in the correction of iron chlorosis in plants, from waste materials or by-products containing phosphoric acid and/or phosphates and industrial products containing Fe(II), comprising the steps of:
a. providing waste materials or by-products containing phosphoric acid and/or phosphates and, where necessary, adjusting their P content with phosphoric acid to 0.01 - 23 % P (w/w);
b. mixing the material from step a) with industrial by-products containing Fe(II) with an Fe concentration in the range 0.5 to 27.5% Fe (w/w);
c. adjusting the pH of the resulting solution or suspension to a value between 6.5 and 7.5 with a mixture comprising at least one of NH₄OH, NaOH and KOH, thereby precipitating the product comprising ferrous phosphate and ammonium, potassium and sodium phosphates; and
d. separating and drying the precipitate obtained.

2. A method according to claim 1, wherein, in step a), the P content is adjusted with phosphoric acid, if necessary, to a value in the range 0.5% - 12% P (w/w).

3. A method according to claim 2, wherein, in step a), the P content is adjusted with phosphoric acid, if necessary, to a value in the range 0.65% - 6.55% P (w/w).

4. A method according to any of claims 1 to 3, wherein the material in step a) is a solution or suspension which, in step b), is mixed at a ratio of 0.1 ml - 368.45 ml of solution or suspension per gram of Fe contained in the industrial by-products containing Fe(II).

5. A method according to any of claims 1 to 4, wherein the material in step a) is a solution or suspension which, in step b), is mixed at a ratio of 1.1 ml - 72.41 ml of solution or suspension per gram of Fe contained in the industrial by-products containing Fe(II).

6. A method according to any of claims 1 to 4, wherein the material in step a) is a solution or suspension which, in step b), is mixed at a ratio of 5.34 ml - 58.50 ml of solution or suspension per gram of Fe contained in the industrial by-products containing Fe(II).

7. A method according to any of the previous claims, wherein, in step c), the pH is adjusted to a value of around 7.0.

8. A method according to any of the previous claims, wherein, in step d), the drying is carried out at a temperature of up to 100°C over 18 hours.

9. A method according to any of the previous claims, wherein the waste materials or by-products containing phosphoric acid and/or phosphates are acidic waste waters or other currents or solid or semi-solid by-products from the manufacture of phosphoric acid or phosphate fertilizers.

10. A method according to any of the previous claims, wherein the industrial by-products containing Fe(II) are waste materials or currents in liquid, solid or semi-solid form containing ferrous sulphates or other salts of mainly Fe(II).

11. The use of a product obtained according to the method of any of the previous claims 1 to 11 as plant fertilizer.

12. The use of a product obtained according to the method of any of the previous claims 1 to 11 in preventive or corrective treatment for iron chlorosis in plants.

## Patentansprüche

1. Eine Methode zum Erhalt eines Produkts, das Eisenphosphat und Ammonium-, Kalium- oder Natriumphosphate umfasst, das als Düngemittel und bei der Verbesserung der Eisenchlorose in Pflanzen verwendbar ist, aus Abfallstoffen oder Nebenprodukten, die Phosphorsäure und/oder Phosphate enthalten und Industrieerzeugnissen, die Fe(II) enthalten, umfasst folgende Schritte:
a. Bereitstellung von Abfallstoffen oder Nebenprodukten, die Phosphorsäure und/oder Phosphate enthalten und nötigenfalls ihren P-Gehalt mit Phosphorsäure auf 0,01 bis 23 Gew.-% P anpassen:
b. Mischen des Materials von Schritt a) mit industriellen Nebenprodukten, die Fe(II) mit einer Fe-Konzentration im Bereich von 0,5 bis 27,5 Gew.-% Fe enthalten:
c. Anpassung der pH der sich daraus ergebenden Lösung oder Suspension auf einen Wert zwischen 6,5 und 7,5 mit einer Mischung, die mindestens aus NH₄OH, NaOH und KOH besteht, sodass sich das Produkt, das Eisenphosphat und Ammonium-, Kalium- und Natriumphosphate enthält absetzt; und
d. den erhaltenen Abscheidungsstoff trennen und trocknen.

2. Eine Methode nach Anspruch 1, wobei in Schritt a) der P-Gehalt nötigenfalls mit Phosphorsäure angepasst wird, zu einem Wert im Bereich von 0,5 bis 12 Gew.-% P.

3. Eine Methode nach Anspruch 2, wobei in Schritt a) der P-Gehalt nötigenfalls mit Phosphorsäure angepasst wird, zu einem Wert im Bereich von 0,65 bis 6,55 Gew.-% P.

4. Eine Methode nach einem der Ansprüche 1 bis 3, wobei das Material in Schritt a) eine Lösung oder Suspension ist, die in Schritt b) in einem Verhältnis von 0,1 ml bis 368,45 ml der Lösung oder Suspension pro Gramm Fe gemischt wird, das in den industriellen Nebenprodukten enthalten ist, die Fe(II) enthalten.

5. Eine Methode nach einem der Ansprüche 1 bis 4, wobei das Material in Schritt a) eine Lösung oder Suspension ist, die in Schritt b) in einem Verhältnis von 1,1 ml bis 72,41 ml der Lösung oder Suspension pro Gramm Fe gemischt wird, das in den industriellen Nebenprodukten enthalten ist, die Fe(II) enthalten.

6. Eine Methode nach einem der Ansprüche 1 bis 4, wobei das Material in Schritt a) eine Lösung oder Suspension ist, die in Schritt b) in einem Verhältnis von 5,34 ml bis 58,50 ml der Lösung oder Suspension pro Gramm Fe gemischt wird, das in den industriellen Nebenprodukten enthalten ist, die Fe(II) enthalten.

7. Eine Methode nach einem der vorstehenden Ansprüche, wobei in Schritt c) der pH auf einen Wert von ungefähr 7,0 angepasst wird.

8. Eine Methode nach einem der vorstehenden Ansprüche, wobei in Schritt d) das Trocknen bei einer Temperatur von bis zu 100 °C über 18 Stunden lang durchgeführt wird.

9. Eine Methode nach einem der vorstehenden Ansprüche, wobei die Abfallstoffe oder Nebenprodukte, die Phosphorsäure und/oder Phosphate enthalten, saure Abwässer oder andere Ströme oder feste oder halbfeste Nebenprodukte aus der Herstellung von Phosphorsäure oder Phosphatdünger sind.

10. Eine Methode nach einem der vorstehenden Ansprüche, wobei die industriellen Nebenprodukte, die Fe(II) enthalten, Abfallstoffe oder Ströme in flüssiger, fester oder halbfester Form sind, die Eisensulfate oder andere Salze vorwiegend aus Fe(II) enthalten.

11. Die Verwendung eines Produkts, das durch einen der vorstehenden Ansprüche 1 bis 11 erhalten wird, als Pflanzendünger.

12. Die Verwendung eines Produkts, das durch einen der vorstehenden Ansprüche 1 bis 11 erhalten wird, als vorbeugende oder korrigierende Behandlung für Eisenchlorose bei Pflanzen.

## Revendications

1. Procédé pour obtenir un produit comprenant du phosphate ferreux et des phosphates d'ammonium, de potassium ou de sodium, qui peut être utilisé comme engrais et pour corriger la chlorose ferrique chez les végétaux, à partir de déchets ou de sous-produits contenant de l'acide phosphorique et/ou des phosphates et des produits industriels contenant Fe(II), comprenant les étapes consistant à :
a. prévoir des déchets ou des sous-produits contenant de l'acide phosphorique et/ou des phosphates et, si nécessaire, ajuster leur teneur en P avec de l'acide phosphorique à 0,01 - 23% P (p/p) ;
b. mélanger la matière de l'étape a) avec des sous-produits industriels contenant Fe(II) ayant une concentration en Fe allant de 0,5 à 27,5% Fe (p/p) ;
c. ajuster le pH de la solution ou suspension ainsi produite à une valeur comprise entre 6,5 et 7,5 avec un mélange comprenant au moins l'une de NH₄OH, NaOH et KOH, en précipitant ainsi le produit comprenant du phosphate ferreux et des phosphates d'ammonium, de potassium et de sodium ; et
d. séparer et sécher le précipité obtenu.

2. Procédé selon la revendication 1, où, dans l'étape a), la teneur en P est ajustée avec de l'acide phosphorique, si nécessaire, à une valeur dans la gamme de 0,5% - 12% P (p/p).

3. Procédé selon la revendication 2, où, dans l'étape a), la teneur en P est ajustée avec de l'acide phosphorique, si nécessaire, à une valeur dans la gamme de 0,65% - 6,55% P (p/p).

4. Procédé selon l'une des revendications 1 à 3, où la matière dans l'étape a) est une solution ou suspension qui, dans l'étape b), est mélangée dans une proportion de 0,1 ml - 368,45 ml de solution ou suspension par gramme de Fe contenu dans les sous-produits industriels contenant Fe(II).

5. Procédé selon l'une des revendications 1 à 4, où la matière dans l'étape a) est une solution ou suspension qui, dans l'étape b), est mélangée dans une proportion de 1,1 ml - 72,41 ml de solution ou suspension par gramme de Fe contenu dans les sous-produits industriels contenant Fe(II).

6. Procédé selon l'une des revendications 1 à 4, où la matière dans l'étape a) est une solution ou suspension qui, dans l'étape b), est mélangée dans une proportion de 5,34 ml - 58,50 ml de solution ou suspension par gramme de Fe contenu dans les sous-produits industriels contenant Fe(II).

7. Procédé selon l'une des revendications précédentes, où, dans l'étape c), le pH est ajusté à une valeur d'environ 7,0.

8. Procédé selon l'une des revendications précédentes, où, dans l'étape d), le séchage est réalisé à une température allant jusqu'à 100° C pendant plus de 18 heures.

9. Procédé selon l'une des revendications précédentes, où les déchets ou sous-produits contenant de l'acide phosphorique et/ou des phosphates sont des eaux résiduelles acides ou d'autres sous-produits liquides ou solides ou semi-solides provenant de la fabrication d'engrais à l'acide phosphorique ou phosphatés.

10. Procédé selon l'une des revendications précédentes, où les sous-produits industriels contenant Fe(II) sont des matières ou des fluides résiduels sous la forme liquide, solide ou semi-solide contenant des sulfates ferreux ou d'autres sels de Fe(II) principalement.

11. L'utilisation comme engrais pour végétaux d'un produit obtenu selon le procédé de l'une des revendications 1 à 11 précédentes.

12. L'utilisation d'un produit obtenu selon le procédé de l'une des revendications 1 à 11 précédentes dans le traitement préventif ou correctif de la chlorose ferrique chez les végétaux.
